# EUROPÄISCHE PATENTSCHRIFT

(11) **EP 4 170 977 B1**
(45) Veröffentlichungstag und Bekanntmachung des Hinweises auf die Patenterteilung: **22.07.2026**
(21) Anmeldenummer: 22170107.1
(22) Anmeldetag: 26.04.2022
(51) Int. Cl.: H04L 43/028, H04L 43/12, G06F 21/85, H04L 12/40, G06F 21/56, G06F 21/55, H04L 9/40, G06F 21/57

(54) **VERFAHREN ZUM ÜBERWACHEN EINES DATENNETZWERKS IN EINEM KRAFTFAHRZEUG SOWIE SWITCHVORRICHTUNG UND KRAFTFAHRZEUG**
SWITCHING DEVICE, MOTOR VEHICLE AND METHOD FOR MONITORING A DATA NETWORK IN A MOTOR VEHICLE
PROCÉDÉ DE SURVEILLANCE D'UN RÉSEAU DE DONNÉES DANS UN VÉHICULE AUTOMOBILE, AINSI QUE DISPOSITIF DE COMMUTATION ET VÉHICULE AUTOMOBILE

(30) Priorität: 22.10.2021 WO PCT/EP2021/079302
(43) Veröffentlichungstag der Anmeldung: 26.04.2023
(73) Patentinhaber: Audi AG, 85045 Ingolstadt (DE); TTTech Auto AG, 1040 Wien (AT)
(72) Erfinder: SCHMIDT, Karsten, 85051 Ingolstadt (DE); STANGL, Bernhard, 1030 Wien (AT); PATRASCU, Costel, 062062 Bukarest (RO); STIRECIU, Alexandru, 031784 Bukarest (RO)
(74) Vertreter: Hofstetter, Schurack & Partner

(56) Entgegenhaltungen:
- EP-B1- 3 442 192
- CN-A- 109 391 523
- DE-A1- 102018 201 718
- US-A1- 2002 075 714
- US-A1- 2011 080 916
- US-B1- 7 904 642
- US-B1- 9 424 366
- ANONYMOUS: "Content-addressable memory - Wikipedia - Version of 21 October 2021", 21 October 2021 (2021-10-21), XP055967782, Retrieved from the Internet <URL:https://en.wikipedia.org/w/index.php?title=Content-addressable_memory&oldid=1051053048> [retrieved on 20221004]
- ANONYMOUS: "Look-Aside Interface - Wikipedia - Version of 14 December 2020", 14 December 2020 (2020-12-14), XP055968078, Retrieved from the Internet <URL:https://en.wikipedia.org/w/index.php?title=Look-Aside_Interface&oldid=994188436> [retrieved on 20221005]

## Beschreibung

Die Erfindung betrifft ein Verfahren zum Überwachen eines Datennetzwerks in einem Kraftfahrzeug. Die Überwachung findet in einer Switchvorrichtung statt, welche Datenpakete zwischen Netzwerkzweigen des Datennetzwerks durchleitet. Ohne dass es hierbei zu einer Verzögerung oder Latenz bei der Weiterleitung kommt, sollen die Datenpakete oder zumindest einige davon daraufhin überprüft werden, ob es sich um vorbestimmten, unerwünschten Datenverkehr handelt, wie er beispielsweise Bestandteil eines Hackerangriffs oder durch ein manipuliertes und/oder defektes Steuergerät des Kraftfahrzeugs verursacht sein kann. Zu der Erfindung gehören auch eine Switchvorrichtung, die in einem Datennetzwerk eines Kraftfahrzeugs für die Überwachung verwendet werden kann, sowie ein Kraftfahrzeug mit einem Datennetzwerk und der Switchvorrichtung.

In einem Kraftfahrzeug können Steuergeräte über ein Datennetzwerk miteinander gekoppelt sein, um Datenpakete auszutauschen, wodurch eine mehrere Steuergeräte umfassende Fahrzeugfunktionalität realisiert werden kann. Ein Beispiel für ein solches Datennetzwerk ist ein Ethernet-Netzwerk. Netzwerkzweige eines solchen Datennetzwerks können über eine Switchvorrichtung (eine Kurzbezeichnung ist auch "Switch"), das heißt eine Datenweiche, verschaltet sein. Dazu kann jeder Netzwerkzweig an einem jeweiligen Port angeschlossen sein, bei dem es sich einen physikalischen Anschluss für einen Netzwerkzweig sowie eine Schaltung zum Aussenden und Empfangen von Datenpaketen handelt. Trifft an einem Port des Switches ein Datenpaket ein, so wird ermittelt, in welchen anderen Netzwerkzweig oder in welche mehrere andere Netzwerkzweige das Datenpaket weitergeleitet werden muss. Das Datenpaket wird dann innerhalb der Switchvorrichtung mittels einer Switchschaltung an den entsprechenden Port weitergeleitet oder ausgesendet. Die Switchschaltung wird durch einen Netzwerkprozessor gesteuert, der den jeweiligen Zielport ermittelt.

Um zu ermitteln, wohin ein empfangenes Datenpaket weitergeleitet werden muss, also an welchem Zielport es durch die Switchschaltung geleitet werden muss, kann ein so genannter Assoziativspeicher vorgesehen sein. Eine andere Bezeichnung für einen solchen Assoziativspeicher ist auch CAM-Filter (CAM - content addressable memory), wie beispielsweise der TCAM (ternary content addressable memory). Mit diesem kann das so genannte Switching oder Routing in einer Switchschaltung einer Switchvorrichtung gesteuert werden. Durch das geswitchte Weiterleiten von Datenpaketen können Netzwerkzweige voneinander logisch getrennt gehalten werden, wodurch sich auch eine Firewall-Funktionalität realisieren lässt. Bei einem Assoziativspeicher lassen sich als Eingabedaten eine begrenzte Anzahl von Bits oder Bytes aus dem empfangenen Datenpaket eingeben, um Zielportdaten zu erhalten, die den zumindest einen zu verwendenden Zielport beschreiben. Je mehr solcher Zielbestimmungsdaten aus einem empfangenen Datenpaket ein Assoziativspeicher verarbeiten können soll, also je länger oder je mehr Daten aus einem empfangenen Datenpaket verarbeitet werden können sollen, desto mehr Chipfläche und Leistungsverbrauch werden bei einem Assoziativspeicher benötigt. Daher ist es kostspielig, einen aufwändigen Assoziativspeicher in einer Switchvorrichtung bereitzustellen, weshalb man dies verhindern möchte.

Für die Erkennung einer Manipulation im Datennetzwerk, also eine so genannte IDS (intrusion detection system) und eine Firewall-Funktionalität ist man dagegen daran interessiert, von einem empfangenen Datenpaket möglichst viele Daten des Datenpakets zu analysieren. Dies steht dem Zwang, den Assoziativspeicher möglichst kostengünstig bereitzustellen, entgegen. Somit lassen sich beispielsweise höhere Protokollschichten oder Protokoll-Layer mit einem Assoziativspeicher nur dann analysieren, wenn dieser entsprechend aufwändig gestaltet und damit kostspielig ist.

Das Überprüfen von E-Mail-Datenverkehr auf unerwünschte Absenderadressen kann beispielsweise mittels eines Assoziativspeichers durchgeführt werden, was in der US 2005 / 0 216 770 A1 beschrieben ist. Dies erfordert allerdings einen entsprechend kostspieligen TCAM.

Aus der US 2007 / 022474 A1 ist bekannt, dass ein assoziativer CAM-Speicher zum gleichzeitigen Speichern von Daten für unterschiedliche Filteranwendungen genutzt werden kann.

In EP 3 442 192 B1 wird ein Verfahren beschrieben, bei welchem der Datenverkehr in einem Netzwerk, welches sich insbesondere in einem Kraftfahrzeug befindet, auf Basis einer zustandsorientierten Paketprüfung überwacht wird, wobei insbesondere ein CAM miteinbezogen wird um zu entscheiden, ob die Übertragung der Daten zugelassen wird.

US 2002/0075714 A1 beschreibt einen CAM, welcher aus mehreren CAM Blocks besteht, wobei der CAM als gesamtes unterteilt werden kann in mehrere individuell durchsuchbare Teile, welche wiederum aus einem oder mehreren CAM Blöcken bestehen. In jedem dieser Blöcke ist hierbei eine Klasse oder ein Datentyp gespeichert, wobei während Vergleichen in jedem CAM Block jeweils die Klasse oder der Datentyp betrachtet wird und dementsprechend der Block aktiviert oder deaktiviert wird, wodurch während Vergleichen nur diejenigen Blocks miteinbezogen werden, welche die entsprechende Klasse oder den entsprechenden Datentyp enthalten.

US 9,424,366 B1 beschreibt ein Verfahren, in welchem der Datenzugriff auf die Daten eines TCAM beschrieben wird.

US 7,904,642 B1 beschreibt ein Verfahren, um den Speicherplatz zu minimieren, welcher in einem TCAM für das Abspeichern von Access Control Lists (ACL) zuständig ist. Eine ACL wird hierbei beispielsweise im Kontext einer Firewall verwendet, wobei hierin auf Basis einer Paketklassifikation gegeben ist, ob das Paket mit den Daten weitergeleitet werden darf oder nicht.

Die US 2011/0080916 A1 beschreibt eine Switchvorrichtung mit zumindest mehreren Ausgangsport, welche verschiedene Datentypen verwalten kann.

DE 10 2018 201 718 A1 beschreibt ein Verfahren zur Erkennung einer Anomalie in einem Datenstrom insbesondere in einem Kraftfahrzeug, wobei hierfür auf Basis von bereits übertragenen Datenpaketen zukünftig zu erwartende Datenpakete vorausberechnet werden und anschließend die kommenden ein oder mehreren Datenpakete auf Basis dieser präzedierten Datenpakete überprüft werden.

XP055967782 ist ein Wikipedia Artikel über Content-adressable memory (CAM), aus welchem unter anderem eine beispielhafte Anwendung eines CAM in einem Computernetzwerk hervorgeht.

XP055968078 ist ein Wikipedia Artikel über ein look-aside interface, welches von Geräten verwendet wird, um beispielsweise eine Verbindung zwischen einer NPU und einem CAM herzustellen.

Der Erfindung liegt die Aufgabe zugrunde, mittels der begrenzten Ressourcen eines Assoziativspeichers und eines damit verbundenen Netzwerkprozessors eine Überwachung eines Datennetzwerks auf unerwünschte Datenpakete oder Dateninhalte durchzuführen.

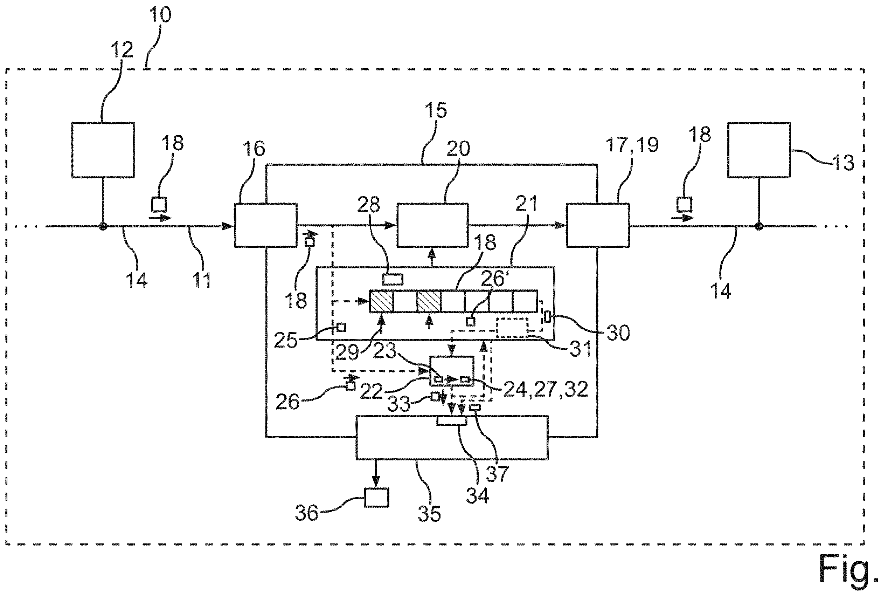

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figur beschrieben.

Durch die Erfindung ist ein Verfahren beschrieben, um ein Datennetzwerk in einem Kraftfahrzeug zu überwachen, wobei in dem Datennetzwerk eine Switchvorrichtung betrieben wird, in welcher physikalische Ports zum Empfangen und zum Aussenden von Datenpaketen über eine Switchschaltung (d.h. der eigentliche Switch oder die eigentliche Datenweiche) verschaltet sind und bei dem Verfahren aus einem jeweiligen Datenpaket, das über einen der Ports empfangen wurde, z.B. durch den besagten Netzwerkprozessor Zielbestimmungsdaten (erste Eingabedaten) ausgelesen werden. Bei den Zielbestimmungsdaten handelt es sich um Daten, die an vorbestimmten Auswahlpositionen des Datenpakets ausgelesen werden, z.B. an vorbestimmten Bytepositionen (z.B. Byte 5 bis Byte 11). Den Zielbestimmungsdaten werden dann in bekannter Weise durch einen Assoziativspeicher sogenannte Zielportdaten (erste Ausgabedaten), die zumindest einen Zielport für das Datenpaket angeben, zugeordnet. Gemäß diesen Zielportdaten wird dann aus den vorhandenen Ports zumindest einer als Zielport ausgewählt. Durch die Switchschaltung wird dann das empfangene Datenpaket an den zumindest einen Zielport zum Aussenden geleitet. Die Erfindung geht also aus von der an sich bekannten Switchvorrichtung, einem so genannten Switch, über welchen Netzwerkzweige eines Datennetzwerks miteinander verschaltet sein können. Dazu werden aus einem Datenpaket zum Ermitteln der Zielports an den Auswahlpositionen des Datenpakets die Zielbestimmungsdaten ausgelesen. Durch einen Assoziativspeicher werden den Zielbestimmungsdaten die benötigten Zielportdaten zugeordnet, die angeben, über welchen Zielport das Datenpaket wieder in das Datennetzwerk auszugeben ist, das heißt in welchen Netzwerkzweig das Datenpaket weitergeleitet werden soll. Die Auswahlpositionen eines Datenpakets können beispielsweise die MAC-Adresse aus dem Datenpaket (MAC - media access control) und/oder eine IP-Adresse (IP - internet protocoll) beschreiben, um nur Beispiele zu nennen. Hier kann das an sich aus dem Stand der Technik bekannte "Switching" und/oder "Routing" durchgeführt werden. Jeder physikalische Port kann in der beschriebenen Weise einen mechanischen Anschluss für ein Netzwerkkabel eines Netzwerkzweigs und/oder eine Transceiverschaltung für das Empfangen und das Aussenden von Datenpaketen in an sich bekannter Weise vorsehen.

Um nun mit diesen beschriebenen Ressourcen die erfindungsgemäße Aufgabe zu lösen, sieht die Erfindung vor, dass in dem Assoziativspeicher zumindest ein Datenmuster eines zu überwachenden und/oder zu detektierenden Pakettyps und/oder Dateninhalts jeweils zusammen mit jeweils zugeordneten Aktionsdaten gespeichert gehalten wird. Mit anderen Worten wird also der Assoziativspeicher nicht nur mit Datenmustern zum Erkennen von Zielbestimmungsdaten vorbereitet, denen Zielportdaten für das Weiterleiten eines empfangenen Datenpakets zugeordnet sind, sondern zusätzlich werden weitere Speicherzellen oder Speicherregister des Assoziativspeichers mit solchen Datenmustern belegt, denen Aktionsdaten zugeordnet sind und die erkannt werden, wenn das jeweilige Datenmuster in einem empfangenen Datenpaket erkannt wird. Entsprechend sieht die Erfindung des Weiteren vor, dass für eine Realisierung eines IDS (intrusion detection system) z.B. in dem Netzwerkprozessor Überwachungspositionen für zu überwachende Detektionsdaten festgelegt sind, also solche Positionen in einem empfangenen Datenpaket, wo sich Daten befinden, die auf eine Manipulation des Datennetzwerks hinweisen können. Des Weiteren ist dann vorgesehen, dass der Netzwerkprozessor an den Überwachungspositionen die Detektionsdaten aus dem Datenpaket ausliest und daraus Daten bildet, die hier als Überwachungsdaten (zweite Eingabedaten) bezeichnet sind, die als Eingabedaten für den Assoziativspeichers verwendet werden, genauso wie die Zielbestimmungsdaten selbst. Der Assoziativspeicher muss hier hardwaretechnisch nicht anders ausgelegt werden.

Es werden somit nicht die Detektionsdaten direkt als Eingabedaten für den Assoziativspeicher verwendet, sondern die Detektionsdaten werden zunächst umgewandelt, was die Überwachungsdaten ergibt. Dies erfolgt durch Anwenden einer Operation, d.h. zumindest einer datenverändernden Vorverarbeitung (Preprocessing) auf die Detektionsdaten, sodass diese in die Überwachungsdaten umgewandelt werden. Diese umgewandelten Detektionsdaten, nämlich die Überwachungsdaten, stellen die Eingabedaten für den Assoziativspeicher dar, wenn es um das IDS geht.

Durch Eingeben dieser Überwachungsdaten in den Assoziativspeicher wird überprüft, welche Aktionsdaten sich ergeben. Mit anderen Worten werden in dem Netzwerkprozessor weitere Auswahlpositionen definiert, die hier als Überwachungspositionen oder Detektionspositionen bezeichnet sind. An diesen Überwachungspositionen, also an vorbestimmten Bits oder Bytes des Datenpakets, sollen ebenfalls die Dateninhalte des Datenpakets ausgelesen werden. Durch diese ausgelesenen Daten ergeben sich dann die Detektionsdaten. Diese Detektionsdaten können nach ihrer Umwandlung oder Vorverarbeitung durch die zumindest eine besagte Vorverarbeitung behandelt werden, wie die Zielbestimmungsdaten, das heißt sie können als Eingabedaten dem Assoziativspeicher eingegeben oder bereitgestellt werden. Der Assoziativspeicher reagiert dann in derselben Weise wie auch auf Zielbestimmungsdaten, das heißt bei einer Übereinstimmung mit einem der Datenmuster in dem Assoziativspeicher gibt dieser die zugeordneten Daten aus, die nun aber keine Zielportdaten sind, sondern die besagten Aktionsdaten (zweite Ausgabedaten). Weil die Überwachungsdaten wie die Zielbestimmungsdaten verwendet werden können, sind beide hier auch als Eingabedaten für den Assoziativspeicher beschrieben, das heißt durch die Erfindung muss der Assoziativspeicher in keiner Weise speziell ausgerüstet oder erweitert werden. Ein Datenmuster, wie es im Assoziativspeicher für einen Vergleich mit den jeweiligen Eingabedaten (Zielbestimmungsdaten, Überwachungsdaten) gespeichert sein kann, kann für beide Verwendungszwecke ein Bitmuster oder Bytemuster sein. Ausgabedaten können für beide Verwendungszwecke jeweils eine Bitfolge oder Bytefolge sein. Es können Füllbits vorgesehen sein, wenn eine Speicherzelle größer ist als benötigt.

Liegen dann Aktionsdaten vor, weil aus einem Datenpaket dessen umgewandelte Detektionsdaten, d.h. die Überwachungsdaten, einem Datenmuster für Aktionsdaten entsprechen, ist vorgesehen, dass gemäß den sich ergebenden Aktionsdaten eine Detektionsaktion für das Datenpaket gesteuert oder gestartet wird und sich aus dieser Detektionsaktion ergebende Ergebnisdaten an einer Datenschnittstelle einer Recheneinheit bereitgestellt, die mit der Switchvorrichtung über die Datenschnittstelle gekoppelt ist. Die Detektionsaktion kann durch den Netzwerkprozessor selbst oder einen zusätzlichen Prozessor der Switchvorrichtung durchgeführt werden. Eine Detektionsaktion kann das Weiterleiten des Datenpakets an die Recheneinheit und/oder das Inkrementieren eines Zähler des Detektionsereignisses und/oder das Ermitteln eines Zeitstempels des Detektionszeitpunkts sein. Die über die Datenschnittstelle angekoppelte Recheneinheit kann auf einem Mikroprozessor, d.h. einer CPU oder einem Signalprozessor, beruhen. Im Folgenden wird daher die Recheneinheit hier als Mikroprozessor bezeichnet.

Durch die Detektionsaktion kann dann vorgesehen werden, dass beispielsweise in dem Datenpaket noch weitere Paketdaten des Datenpaketes daraufhin überprüft werden, ob sie einem vorbestimmten Zusatzdatenmuster entsprechen. Somit kann eine Detektionsaktion eine Zusatzüberprüfung oder ein vertiefte Überprüfung des Datenpakets umfassen. Die Ergebnisdaten dieser Detektionsaktion werden dann aus der Switchvorrichtung ausgeleitet, nämlich über die Datenschnittstelle an den besagten externen Mikroprozessor, der daraufhin anhand der Ergebnisdaten erkennen kann, ob Schadsoftware oder schädliche Daten in dem Datennetzwerk vorhanden sind. Anhand der Ergebnisdaten kann der Mikroprozessor eine Reaktion oder einen Hinweis auf einen Hackerangriff oder eine Manipulation zumindest eines Steuergeräts des Datennetzwerks erzeugen. Als Reaktion auf einen unerwünschten Absender kann beispielsweise ein Datenpaket gelöscht werden. Zusätzlich oder alternativ kann eine Detektionsaktion umfassen, dass das Datenpaket über die Datenschnittstelle an den Mikroprozessor übergeben wird, sodass das Datenpaket selbst geprüft werden kann. Eine Detektionsaktion kann umfassen, dass ein vorbestimmtes statistisches Maß, insbesondere eine Senderate, zu dem Datenpaket ermittelt wird, indem Zeitstempel eines jeweiligen Sende- und/oder Empfangszeitpunkts des Datenpakets und weiterer Datenpakete desselben Pakettyps und/oder Absenders und/oder Empfängers erfasst werden. Eine geeignete Detektionsaktion kann der Fachmann in Abhängigkeit von der Überwachungsaufgabe festlegen. Die Erfindung kann hier ein Framework bieten, um eine benötigte Detektionsaktion über die Datenschnittstelle aus dem Mikroprozessor in eine Switchvorrichtung auszulagern. Die Datenschnittstelle kann z.B. einer der Ports sein, über welchen der besagte Mikroprozessor für das IDS mit der Switchschaltung verbunden ist, d.h. verdächtige oder detektierte Datenpakete können über diesen Port an den Mikroprozessor zur weiteren Analyse weitergeleitet werden. Ein Datenpakte kann somit an zwei Ports oder Ausgängen ausgegeben werden, d.h. den ermittelten Zielport und die z.B. als Port ausgestaltete Datenschnittstelle. Die Datenschnittstelle kann alternativ dazu von den Port verschieden sein, z.B. eine Busverbindung.

Somit kann der Mikroprozessor anhand des über die Switchvorrichtung geführten Datenverkehrs, das heißt anhand der empfangenen und über die Zielports weitergeleiteten Datenpaketen, erkennen, ob in dem Datennetzwerk des Kraftfahrzeugs ein unerwünschter Zustand zumindest eines Steuergeräts vorliegt. Hierzu ist es nicht notwendig, dass der Datenverkehr verlangsamt wird oder mit einer signifikanten Latenz versehen wird, da der Assoziativspeicher und der zugehörige oder zuarbeitende Netzwerkprozessor die Datenpakete für das Auslösen von Detektionsaktionen in derselben Weise verarbeitet werden, wie es auch für das Weiterleiten geschieht. Somit kann Hardware verwendet werden, die auf die Übertragungsrate oder den Datendurchsatz des Switchvorrichtung ausgelegt werden kann.

Durch die Erfindung ist das zusätzliche vorteilsbringende Merkmal vorgesehen, dass die zumindest eine vorverarbeitende, datenverändernde Vorverarbeitung auf die Detektionsdaten angewendet wird, z.B. eine logische Verknüpfung (UND, ODER), was eine Vorverarbeitung vor dem eigentlichen mittels des Assoziativspeichers durchgeführten Detektionsschritts zulässt. Die Vorverarbeitung kann hierbei auf einem nicht-programmierbaren Netzwerkprozessor, z.B. einem Logikgatter, beruhen, .d.h. ein Mikroprozessor und Software sind nicht notwendig.

Es werden mehrere Datensätze für jeweilige, unterschiedliche Überwachungspositionen (Positionsdatensätze) bereitgestellt. Es müssen also aus einem empfangenen Datenpaket nicht immer an denselben Überwachungspositionen (Bitpositionen und/oder Bytepositionen) die Detektionsdaten (Bits und/oder Bytes) ausgelesen werden. Vielmehr ist vorgesehen, dass durch den Netzwerkprozessor anhand von Daten des Datenpakets eine Paketcharakteristik des jeweiligen Datenpakets ermittelt wird. Des Weiteren ist vorgesehen, dass in Abhängigkeit von der Paketcharakteristik einer aus den besagten Positionsdatensätzen ausgewählt wird (also die relevanten Überwachungspositionen festgelegt werden) und die Detektionsdaten an den durch den ausgewählten Positionsdatensatz angegebenen Überwachungspositionen ausgelesen werden. Mit anderen Worten kann dynamisch in Abhängigkeit von den Daten des aktuell empfangenen Datenpakets ausgewählt werden, an welchen Stellen oder Überwachungspositionen des Datenpakets Daten ausgelesen werden, um diese zu Detektionsdaten zusammenzufassen. Insbesondere ist jeweils vorgesehen, dass nur ein Teil der Daten des Datenpakets als Detektionsdaten ausgelesen wird, sodass also der Assoziativspeicher weniger Daten als das gesamte Datenpaket oder insbesondere sogar weniger Daten als der so genannte Paketheader des Datenpakets als Eingabedaten verarbeiten können muss.

Als Daten zum Auswählen der Detektionsdaten können Headerdaten und/oder Nutzdaten des Datenpakets ausgewählt werden, wobei die Überwachungspositionen bevorzugt lediglich einen Teil der Headerdaten oder einen Teil der Nutzdaten, also nicht die gesamten Headerdaten oder Nutzdaten, umfassen.

Wie bereits ausgeführt, werden die an den Überwachungspositionen eines Datenpakets ausgelesenen Detektionsdaten zu Überwachungsdaten zusammengefasst, das heißt sie werden in einem Datensatz zusammengefasst, der in dem Assoziativspeicher wie auch die Zielbestimmungsdaten selbst verarbeitet oder gefiltert werden kann. Das besagte Bilden der Überwachungsdaten umfasst, dass die Detektionsdaten mittels einer Shift-Operation umgeordnet und/oder mittels zumindest einer Kombinationsregel kombiniert werden. Es kann eine Vorverarbeitung stattfinden, indem eine Shift-Operation und/oder eine Kombinationsregel angewendet wird. Eine Kombinationsregel kann beispielsweise eine logische Operation, wie beispielsweise AND (Logisch-UND) oder OR (Logisch-ODER), umfassen. Somit lassen sich Bits oder Bytes der Detektionsdaten zusammenfassen oder komprimieren, um beispielsweise ein vorgegebenes Format zu erhalten. Zudem kann durch eine Shift-Operation und/oder eine Kombinationsregel auch bereits ein erster Schritt einer Detektion von unerwünschten Datenverkehr im Datennetzwerks durchgeführt werden. So kann beispielsweise überprüft werden, ob zwei vorbestimmte Bits in den Detektionsdaten eine vorbestimmte logische Kombination (z.B. beide gesetzt oder beide gelöscht) aufweisen. Dies kann dann durch ein einzelnes Bit repräsentiert werden, das Bestandteil der Überwachungsdaten anstelle der ursprünglichen Bits werden kann. Es kann somit zumindest eine Shift-Operation und/oder logische Bit-Kombination in den Detektionsdaten erfolgen, um hierdurch bereits eine erstes vorbestimmtes Datenmuster, (beispielsweise mehrere bestimmte Bits können z.B. alle gesetzt oder gelöscht sein) zu identifizieren. Somit kann unerwünschter Datenverkehr nicht allein am Pakettyp und/oder an den Sende-/Empfangsadressen erkannt werden, sondern auch eine Bitoperation (Shift-Operation und/oder Bit-Kombinierung) kann als Mittel zur Detektion von unerwünschtem Datenverkehr verwendet werden.

Die Detektionsdaten eines Datenpakets können somit in sich durch Prüfen von Bits mittels einer Shift-Operation und/oder einer Kombinationsregel als unerwünschter Datenverkehr erkannt werden. Diese Vorverarbeitung ermöglicht es, Daten eines Datenpakets oder der Detektionsdaten zunächst untereinander zu verknüpfen und/oder neu anzuordnen, um erst dieses Ergebnis der Vorverarbeitung dann in einen Assoziativspeicher einzuspeisen. Somit werden nicht einfach nur Daten aus einem Datenpaket in einen Assoziativspeicher übertragen, sondern Daten eines Datenpakets (Detektionsdaten) werden zunächst vorverarbeitet, um hierdurch bereits einen ersten Schritt beim Detektieren von unerwünschtem Datenverkehr zu implementieren.

Die Erfindung umfasst auch Ausführungsformen, durch die sich zusätzliche Vorteile ergeben.

Eine Ausführungsform umfasst, dass die Paketcharakteristik ein Kommunikationsprotokoll und/oder einen Pakettypen und/oder Dateninhalte angibt. Das Auswählen des Positionsdatensatzes für die Überwachungspositionen kann im Falle des Kommunikationsprotokolls beispielsweise vorsehen, dass zwischen dem TCP (transport control protocol) und dem UDP (user datagram protocol) oder allgemein zwischen unterschiedlichen Internet-Protokollen unterschieden wird. Als Pakettyp kann beispielsweise zwischen einem Erstpaket einer Kommunikation oder Session und einem Folgepaket unterschieden werden. Als Dateninhalte können beispielsweise eine Senderadresse und/oder Empfängeradresse und/oder ein Senderport und/oder ein Empfängerport berücksichtigt werden.

In einem Kraftfahrzeug liegt die Besonderheit vor, dass zumindest ein Teil des Datenverkehrs durch Steuergeräte erzeugt wird, die einem fest programmierten Sendeschema folgen. Lediglich ein vorbekannter Anteil des Datenverkehrs ist dynamisch, beispielsweise Datenverkehr von einem Steuergerät für Unterhaltungselektronik. Der Anteil kann aber auch Null betragen. Eine Ausführungsform umfasst, dass der Mikroprozessor anhand von Sendeplandaten, welche ein bestimmungsgemäßes Sendeschema der Steuergeräte beschreiben, anhand einer vorbestimmten Abgleichroutine erkennt, dass die Ergebnisdaten von dem Sendeschema abweichen. Anhand von Sendeplandaten kann der Mikroprozessor also erkennen, wenn die Ergebnisdaten von dem Sendeschema abweichen, und er kann in diesem Fall eine vorbestimmte Abwehrroutine auslösen. In welchem Fall eine signifikante Abweichung vom Sendeschema vorliegt, kann vom Fachmann durch die Abgleichroutine definiert werden. Beispielsweise kann eine vorbestimmte Abweichung eines Zeitstempels des Datenpakets von dem Sendeschema erkannt werden. Beispielsweise kann für mehrere Datenpakete, die ein gemeinsames Datenmuster enthalten, das mittels des Assoziativspeichers detektiert wird, überprüft werden, ob Sendezeiten und/oder eine Sendereihenfolge und/oder zeitliche Abstände dem Sendeschema entsprechen oder von diesem abweichen.

Hier liegt also die Erkenntnis zugrunde, dass sich bei einem un-manipulierten Kraftfahrzeug, wenn also keines der Steuergeräte von seinem Sendeschema abweicht und auch kein zusätzliches Gerät an das Datennetzwerk angeschlossen ist und zusätzlichen Datenverkehr erzeugt, sich dann auch nur solche Ergebnisdaten ergeben dürfen, die gemäß der Abgleichroutine dem Sendeschema entsprechen, wie es durch die Sendeplandaten beschrieben ist, die z.B. der Hersteller des Kraftfahrzeugs angeben kann. Die Abgleichroutine kann eine exakte Übereinstimmung mit diesen Sendeplandaten fordern oder es kann eine Toleranz für Zählerwerte und/oder Dateninhalte der finalen Ergebnisdaten zugelassen sein. Das beschriebene Verfahren kann insbesondere auf Ethernet-Datenpakete angewendet werden. Ein Ethernet als Datennetzwerk beruht auf paketorientiertem Datenverkehr, sodass (anders als bei einem Zeitschlitz-orientierten Datennetz) Sendezeitpunkte und/oder Datenmengen im Datenverkehr variieren können, da keine reservierten Zeitschlitze vorgesehen sind. Durch einen Zählerwert und/oder durch Zeitstempel kann erkannt werden, ob für ein bestimmtes Datenmuster die Anzahl der Datenpakete und/oder eine Senderate einen Schwellenwert überschreitet. Da zusätzlich in den finalen Ergebnisdaten auch das zugehörige Datenpaket, welches die Überschreibung des Schwellenwerts ausgelöst hat, mit enthalten sein kann, kann ein Rückschluss auf den Sender gezogen werden, also ein manipuliertes oder defektes Steuergerät erkannt werden, oder es kann erkannt werden, dass eine Absenderadresse verwendet wird, die zu keinem lieferseitigen Steuergerät des Kraftfahrzeugs gehört, sondern zu einem zusätzlich an das Datennetzwerk angeschlossenen Gerät.

Als Abwehrroutine oder Abwehrmaßnahme kann beispielsweise eine Einschränkung der Funktionalität im Kraftfahrzeug erfolgen, z.B. eine Verringerung eines Funktionsumfangs oder ein Abschalten der Funktionalität, wie z.B. einer Medianwiedergabe und/oder einer Telefoniefunktion und/oder einer Internet-Verbindung. Je nach TCAM-Eintrag oder Datenmuster, für welches erkannt wird, dass eine Abweichung von dem Sendeschema erfolgt ist, kann eine andere Funktionalität des Kraftfahrzeugs eingeschränkt oder abgestellt werden.

Der Mikroprozessor kann zusätzlich zu den Ergebnisdaten auch ein jeweiliges Aktivitätssignal zumindest einer Fahrzeugkomponente und/oder eines Steuergeräts empfangen und dann überprüfen, ob das Datenpaket aufgrund dieser signalisierten Aktivität der Fahrzeugkomponente und/oder des Steuergeräts gesendet wurde und somit zwar als außerhalb des Sendeschemas liegend, aber durch diese Aktivität ausgelöstes Datenpaket anerkannt wird und damit doch als zulässig klassifiziert wird, sodass die Abwehrroutine nicht ausgelöst werden muss. Das Aktivitätssignal kann z.B. über eine CAN-Bus empfangen werden.

Eine Ausführungsform umfasst, dass die Überwachungspositionen unzusammenhängende Datenbereiche oder Datenfelder des Datenpakets beschreiben, also solche Datenbereiche, zwischen denen sich jeweils mindestens ein Bit oder mindestens ein Byte befindet, das von den Detektionsdaten ausgeschlossen ist, also nicht zu den Detektionsdaten gehört. Die beschriebenen Überwachungspositionen, an denen die Daten aus dem Datenpaket ausgelesen werden, müssen keine zusammenhängende Folge von Bits oder Bytes beschreiben, sondern zwischen den Überwachungspositionen kann sich zumindest ein nicht-überwachtes Bit oder Byte befinden, es können also Daten in dem Datenpaket übersprungen werden, wenn die Detektionsdaten ausgelesen werden. Durch Bereitstellen einer Logik, die auf einzelne und/oder voneinander unabhängige Überwachungspositionen in dem Datenpaket zugreift, können Eingabedaten für den Assoziativspeicher ermittelt oder zusammengesucht oder kombiniert werden, die aussagekräftiger sein können als ein einzelner zusammenhängender Abschnitt des Datenpakets, wie dies im Stand der Technik lediglich verfügbar ist. Die Überwachungspositionen können z.B. als Bit- und/oder Bytenummern (z.B. Byte 1, 4, 7 und 9) und/oder als Bereichsangaben (z.B. Bits 1-3 und 18-64 und 72-124) definiert sein.

Eine Ausführungsform umfasst, dass die Überwachungspositionen und/oder die Datenmuster und/oder die Aktionsdaten durch den Mikroprozessor über die Datenschnittstelle im Betrieb festgelegt und/oder geändert werden. Der Mikroprozessor kann also dynamisch den Netzwerkprozessor und/oder den Assoziativspeicher manipulieren oder konfigurieren, um die Überwachung anzupassen. Der Mikroprozessor kann hierzu insbesondere dazu ausgelegt sein, auf Ergebnisdaten zu reagieren, die für zumindest ein Datenpaket durch eine Detektionsaktion erzeugt wurden. Es können hierbei auch die besagten Sendeplandaten zugrunde gelegt werden. Als Datenmuster kann oder können in dem Assoziativspeicher sogenannte Positivmuster vorgesehen sein, also Datenmuster, die gemäß den Sendeplandaten vorhanden sein müssen, falls ein Steuergerät und/oder das Kraftfahrzeug bestimmungsgemäß oder fehlerfrei funktioniert. Bei Fehlen entsprechender Datenpakete kann z.B. auf eine Betriebsstörung einer Komponente des Steuergeräts, z.B. des Netzwerkcontrollers, rückgeschlossen werden. Die Sendeplandaten können z.B. in Abhängigkeit von einem Betriebszustand des Kraftfahrzeugs eingestellt werden (z.B. in Abhängigkeit von einer Motordrehzahl).

Der Mikroprozessor kann auch beispielsweise über eine Funkverbindung von außerhalb des Kraftfahrzeugs zumindest ein neues Datenmuster und/oder neue Überwachungspositionen und/oder neue Aktionsdaten empfangen und diese dann über die Datenschnittstelle in den Netzwerkprozessor und/oder den Assoziativspeicher eintragen oder abspeichern. Somit kann auf einen neuen Angriffstyp dynamisch reagiert werden.

Eine Ausführungsform umfasst, dass zusätzlich zu den Ergebnisdaten der Detektionsaktion oder als Teil der Ergebnisdaten oder als die Ergebnisdaten insgesamt das jeweilige Datenpaket selbst oder ein Teil davon über die Datenschnittstelle an den Mikroprozessor übermittelt wird. Mit anderen Worten werden nicht nur die Ergebnisdaten selbst, sondern auch das Datenpaket oder ein Teil davon, beispielsweise die Headerdaten und/oder die Nutzdaten (so genannte Payload) über die Datenschnittstelle an den Mikroprozessor übermittelt. Die Detektionsaktion kann auch darin bestehen, als Bestandteil der Ergebnisdaten das Datenpaket oder einen Teil davon bereitzustellen, also das Datenpaket oder den besagten Teil über die Datenschnittstelle auszugeben. Hierdurch steht dann eine erweiterte Analysemöglichkeit im Mikroprozessor betreffend das Datenpaket bereit. Hierdurch kann beispielsweise ein neuer Angriffstyp detektiert oder ermittelt werden.

Eine Ausführungsform umfasst, dass als Datenpakete Ethernetpakete überwacht werden. Ein Ethernet als Datennetzwerk kann aufgrund der paketorientierten Datenübertragung eine Vielzahl, auch in einem Kraftfahrzeug nur mit großem Aufwand vorhersehbaren Zuständen oder Abfolgen von Datenpaketen erzeugen. Hier ist es besonders vorteilhaft, eine Überwachung des Datennetzwerks auf der Grundlage der einzelnen Datenpakete zu realisieren.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Durch die Erfindung ist auch eine Switchvorrichtung für ein Datennetzwerk eines Kraftfahrzeugs beschrieben, wobei die Switchvorrichtung einen Netzwerkprozessor und einen Assoziativspeicher aufweist, die dazu eingerichtet sind, eine Ausführungsform eines erfindungsgemäßen Verfahrens durchzuführen. Die Switchvorrichtung kann in dem Datennetzwerk als Switch oder Router bereitgestellt sein. Als Router kann die Switchvorrichtung in der bekannten Weise noch Routing-Operationen durch einen Datenprozessor bereitstellen. Der Netzwerkprozessor und der Assoziativspeicher stellen zusammen eine Datenverarbeitungsvorrichtung oder eine Prozessoreinrichtung dar, die dazu eingerichtet ist, eine Ausführungsform des erfindungsgemäßen Verfahrens durchzuführen. Der Netzwerkprozessor kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Es kann eine als Netzwerkprozessor spezialisierte Hardware aus dem Stand der Technik zugrunde gelegt werden. Des Weiteren kann der Netzwerkprozessor Programmcode aufweisen, der dazu eingerichtet ist, bei Ausführen durch den Netzwerkprozessor den Teil des erfindungsgemäßen Verfahrens durchzuführen, welcher den Netzwerkprozessor betrifft. Der Programmcode kann in einem Datenspeicher des Netzwerkprozessors gespeichert sein. Der Netzwerkprozessor kann alternativ als reine Hardware-Logik ohne einen gespeicherten Programmcode realisiert sein. Beispielsweise kann es sich um einen ASIC (application specific integrated circuit) handeln.

Durch die Erfindung ist auch ein Kraftfahrzeug beschrieben, das ein Datennetzwerk aufweist, bei welchem mehrere Netzwerkzweige über die besagte Switchvorrichtung verschaltet sind. Ein Mikroprozessor ist über eine Datenschnittstelle in der beschriebenen Weise mit der Switchvorrichtung gekoppelt. Das Kraftfahrzeug ist dazu eingerichtet, eine Ausführungsform des erfindungsgemäßen Verfahrens durchzuführen. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Das Datennetzwerk ist bevorzugt ein Ethernet, das paketorientierten Datenverkehr in dem Kraftfahrzeug vorsieht. Durch das Datennetzwerk können Steuergeräte des Kraftfahrzeugs miteinander für einen Datenaustausch oder eine Datenkommunikation gekoppelt sein. Eines oder mehrere Steuergeräte können dabei jeweils an einem Netzwerkzweig oder Netzwerkstrang angeschlossen sein. Bevorzugt ist pro Netzwerkzweig ein einzelnes Steuergerät oder eine weitere Switchvorrichtung, die wiederum Netzwerkzweige verbindet, angeschlossen.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt die einzige Figur:
- Fig.: eine schematische Darstellung einer Ausführungsform des erfindungsgemäßen Kraftfahrzeugs mit einer Ausführungsform der erfindungsgemäßen Switchvorrichtung, die eine Ausführungsform des erfindungsgemäßen Verfahrens durchführen kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In der Figur bezeichnen gleiche Bezugszeichen jeweils funktionsgleiche Elemente.

Die Fig. zeigt ein Kraftfahrzeug 10, bei dem es sich um einen Kraftwagen, beispielsweise einen Personenkraftwagen oder Lastkraftwagen, handeln kann. In dem Kraftfahrzeug 10 kann ein Datennetzwerk 11 bereitgestellt sein, dass beispielsweise ein Ethernet-Netzwerk sein kann. über das Datennetzwerk 11 können Steuergeräte 12, 13 für eine Datenkommunikation oder einen Datenaustausch miteinander gekoppelt sein. Um mehrere Netzwerkzweige 14 des Datennetzwerks 11 miteinander zu verschalten, kann eine Switchvorrichtung 15 bereitgestellt sein. Ein jeweiliges Netzwerkkabel eines Netzwerkzweigs 14 kann dabei an einen jeweiligen Port 16, 17 der Switchvorrichtung 15 in an sich bekannter Weise angeschlossen sein. Die Fig. zeigt beispielhaft, wie das Steuergerät 12 ein Datenpaket 18 an das Steuergerät 13 senden kann. Hierbei kann die Switchvorrichtung 15 das Datenpaket 18 am Port 16, an welchen der Netzwerkzweig 14 des Steuergeräts 12 angeschlossen ist, empfangen, und aus den mehreren Ports der Switchvorrichtung 15 (nicht dargestellt sind noch mögliche weitere Ports) denjenigen Port 17 auswählen, an welchen der Netzwerkzweig 14 des Steuergeräts 13 angeschlossen ist, sodass in diesem Netzwerkzweig 14 und insbesondere nur in diesem Netzwerkzweig 14, das Datenpaket 18 weitergeleitet werden kann. Das Datenpaket 18 kann allgemein durch die Switchvorrichtung 15 insbesondere ausschließlich an diejenigen Netzwerkzweige oder denjenigen Netzwerkzweig weitergeleitet werden, in welchem sich ein Steuergerät 13 befindet, an welches das Datenpaket 18 in an sich bekannter Weise adressiert ist, beispielsweise über eine so genannte IP-Adresse und/oder MAC-Adresse.

Um in der Switchvorrichtung 15 das empfangene Datenpaket 18 an den korrekten Port 17, also einen Zielport 19, weiterzuleiten, kann in der Switchvorrichtung 15 eine Switchschaltung 20 (auch bezeichnet als Switch-Engine) vorgesehen sein, die in an sich bekannter Weise ausgestaltet sein kann. Die Switchschaltung 20 kann durch einen Netzwerkprozessor 21 gesteuert werden. Zum Ermitteln, welcher Zielport 19 für das empfangene Datenpaket 18 in der Switchschaltung 20 eingestellt werden soll, kann ein Assoziativspeicher 22 vorgesehen sein, insbesondere ein TCAM. In dem Assoziativspeicher 22 können einem jeweiligen möglichen Datenmuster 23 Ausgabedaten 24 zugeordnet sein. Aus dem Datenpaket 18 können beispielsweise durch den Netzwerkprozessor 21 an vorgegebenen Auswahlpositionen 25 des empfangenen Datenpakets 18 die Daten oder deren Dateninhalt ausgelesen werden und zu Zielbestimmungsdaten 26 zusammengefasst werden, die als Eingabedaten für den Assoziativspeicher 22 diesem übergeben werden können. Enthalten die Zielbestimmungsdaten 26 eines der Datenmuster 23, so kann der Assoziativspeicher 22 die entsprechenden Ausgabedaten 24 als Zielportdaten 27 ausgeben. Anhand der Zielportdaten 27 kann beispielsweise der Netzwerkprozessor 21 den entsprechenden Zielport 19 in der Switchschaltung 20 einstellen oder auswählen. Der Assoziativspeicher kann in dem Netzwerkprozessor integriert sein oder von diesem verschieden sein. Die Formulierung, dass "durch den Netzwerkprozessor mittels des Assoziativspeichers Zielportdaten zugeordnet werden" bedeutet also, dass die Logik des Netzwerkprozessors auf den Assoziativspeichers zugreift oder diesen nutzt, wozu der Assoziativspeicher in den Netzwerkprozessor integriert sein kann oder außerhalb von diesem angeordnet und mit diesem verschaltet sein kann. Es kann vorgesehen sein, dass der Assoziativspeicher 22 mit der Switchschaltung 20 verbunden ist, sodass die Zielportdaten 27 direkt, das heißt ohne den Netzwerkprozessor 21, von der Switchschaltung 20 zum Auswählen des Zielports 19 ausgewertet werden können.

In dem Kraftfahrzeug 10 kann mittels der Switchvorrichtung 15 auch ein IDS (Intrusion-Detection-System gegen Softwarefehler und/oder Schadsoftware) realisiert sein, das heißt es kann erkannt werden, ob in dem Datennetzwerk 11 eines der Steuergeräte 12, 13 (dargestellt sind hier beispielhaft nur zwei Steuergeräte) manipuliert ist oder von einem Datenvirus befallen ist und/oder ob ein nichtautorisiertes Gerät an dem Datennetzwerk 11 angeschlossen ist und zumindest ein Datenpaket über die Switchvorrichtung 15 sendet.

Hierzu kann in der Switchvorrichtung 15 ebenfalls der Assoziativspeicher 22 genutzt werden, ohne dass dieser eine zusätzliche Funktionalität aufweisen muss.

Der Netzwerkprozessor 21 kann hierfür zumindest einen Positionsdatensatz 28 bereithalten, in welchem jeweils Überwachungspositionen 29 angegeben sein können, die in dem empfangenen Datenpaket Bitpositionen oder Bytepositionen angegeben können, an welchen der Dateninhalt des empfangenen Datenpakets 18 ausgelesen werden soll, um Detektionsdaten 30 zu erhalten. Die Detektionsdaten 30 können genutzt werden, um daraus Überwachungsdaten 26' zu erzeugen. Hierzu kann zumindest eine datenverändernde Operation 31 auf die Detektionsdaten 30 angewendet werden. Die Überwachungsdaten 26' können wie die Zielbestimmungsdaten 26 in den Assoziativspeicher 22 eingespeist werden. Sie stellen ebenfalls Eingabedaten dar, die auf zumindest ein Datenmuster 23 hin überprüft werden. Trifft eines der Datenmuster 23 zu so werden entsprechende Ausgabedaten 24 durch den Assoziativspeicher 22 ausgegeben. Bei diesen Ausgabedaten 24 handelt es sich dann aber um Aktionsdaten 32, die jeweils einem entsprechenden Datenmuster 23 zugeordnet sein können. Durch die Aktionsdaten 32 kann eine Detektionsaktion 33 ausgelöst werden. Diese kann durch den Netzwerkprozessor 21 ausgeführt werden. Die Detektionsaktion 33 kann auch darin bestehen, dass das Datenpaket 18 selbst oder zumindest ein Teil davon an einer Datenschnittstelle 34 an einen Mikroprozessor 35 übergeben wird, welcher ein manipuliertes Steuergerät 12, 13 erkennen soll und eine entsprechenden Warnhinweis 36 bei Erkennen eines manipulierten Steuergeräts 12, 13 erzeugen kann. Die Aktionsdaten 32 können auch beispielsweise eine durch den Netzwerkprozessor 21 durchgeführte Detektionsaktion auslösen und weitere Ergebnisdaten 37 einer solchen Detektionsaktion können an der Datenschnittstelle 34 Auswertedaten an den Mikroprozessor 35 übergeben oder ausgegeben werden.

Die Zuordnung eines Datenmusters zu Ausgabedaten wird bei einem Assoziativspeicher auch als eine "Regel" bezeichnet. Stimmen Eingabedaten mit dem Datenmuster einer Regel überein, so "feuert" diese Regel, d.h. der Assoziativspeicher gibt die dem Datenmuster zugeordneten Ausgabedaten der Regel aus.

Beim Konfigurieren des Assoziativspeichers sollte darauf geachtet werden, dass die Datenmuster für die Zielportbestimmung und die Datenmuster für das IDS unterschiedlich sind. Andernfalls kann es sein, dass beim Eingeben von Überwachungsdaten dann durch der Assoziativspeicher aufgrund eines doppeldeutigen Datenmusters Zielportdaten ausgegeben werden anstelle von Aktionsdaten, die dann für das IDS nicht genutzt werden können.

Bei Datenmustern für die Zielportbestimmung einerseits und solchen für IDS wurden bisher allerdings solche Übereinstimmungen nicht beobachtet.

Möchte man gezielt dasselbe Datenmuster in zwei unterschiedlichen Regeln abspeichern, nämlich einmal für den Zweck der Zielportbestimmung und einmal für den Zweck des IDS, so können die Datenmuster in Bezug auf ihren jeweiligen Bestimmungszweck disambiguiert werden, indem das jeweilige ursprüngliche Datenmuster um einen disambiguierenden Zusatz ergänzt wird, z.B. ein zusätzliches Bit, um den Bestimmungszweck des Datenmusters zu kennzeichnen. So kann jedem Datenmuster für die Zielportbestimmung z.B. eine 0 und jedem Datenmuster für das IDS eine 1 vorangestellt oder angehängt werden. Allgemein können also alle Datenmuster, die für die Zielportbestimmung vorgesehen sind, entsprechend mit den Zusatz für die Zielportbestimmung ergänzt werden und alle Datenmuster für das IDS mit dem Zusatz für die Zielportbestimmung ergänzt werden. Entsprechend werden dann auch die Zielbestimmungsdaten und die Überwachungsdaten mit dem jeweiligen Zusatz ergänzt. Bei einem Look-up im Assoziativspeicher für die Zielportbestimmung sind also die Eingabedaten mit den entsprechenden Zusatz für Zielportbestimmung ausgestattet (z.B. führende 0), bei einem Look-up für das IDS sind die Eingabedaten mit den entsprechenden Zusatz für IDS ausgestattet (z.B. führende 1). Somit können nur die entsprechenden Datenmuster gefunden werden oder übereinstimmen.

Zusätzlich oder alternativ dazu können die Regeln (Datenmuster mit zugeordneten Ausgabedaten) in unterschiedlichen Speicherblöcken oder Bereichen des Assoziativspeichers gespeichert werden, nämlich einen Bereich für die Zielportbestimmung und einen Bereich für IDS. Solche Bereiche können z.B. geschaffen werden, indem der Assoziativspeicher durch mehrere Speicherbausteine gebildet wird und die Bereiche in jeweils anderen Speicherbausteinen angeordnet sind, sodass durch Adressieren oder Auswählen des jeweiligen zumindest einen Speicherbausteins gesteuert wird, dass die Regeln für die Zielportbestimmung oder die Regeln für das IDS für einen aktuellen Look-up ausgewählt sind. Es kann auch vorgesehen sein, dass für die Zielportbestimmung zumindest ein Speicherbaustein einer anderen Technologie verwendet wird (z.B. Hash-basiertes Assoziieren) als der zumindest eine Speicherbaustein für das IDS.

Anders herum können die im Assoziativspeicher gespeicherten Ausgabedaten der Regeln einen Zusatz aufweisen, der angibt, für welchen Bestimmungszweck (Zieportbestimmung oder IDS) sie vorgesehen sind, ob sie also einen Zielport angeben oder Aktionsdaten darstellen.

Zudem kann bei einem Assoziativspeicher bereits beim Konfigurieren desselben entweder darauf geachtet werden, dass keine doppeldeutigen Datenmuster abgespeichert werden, sodass nie zwei Regeln beim selben Datenmuster "feuern". Beispielsweise kann man beim Einspeichern eines Datenmusters einer neuen Regel ein Warnsignal oder Fehlersignal erzeugen, wenn bereits eine andere Regel mit demselben Datenmuster in dem Assoziativspeicher abgespeichert ist. Aber es kann auch anders herum vorteilhaft sein oder vorgesehen werden, dass Regeln mit Datenmustern abgespeichert werden, durch welche auch zwei oder mehr als zwei Regeln bei einem Datenpaket gemeinsam feuern können. Dies ist insbesondere dann sinnvoll, wenn diese Regeln demselben Anwendungszweck zugeordnet sind, insbesondere dem IDS. So können hierarchisch geordnete allgemeine und spezifische Regeln implementiert werden. Es ist dann eine Implementierungsfrage, wie reagiert wird, falls mehr als eine Regel durch ein Datenpaket erfüllt wird. Die Entscheidung, welcher Hit genutzt werden soll, kann der Fachmann je nach Anwendungsfall durch eine verarbeitende Logik vorbestimmen. Es kann auch eine sehr einfache Logik vorgesehen sein, z.B. immer die Regel mit der kleinsten oder größten Adresse zu verwenden, und bei der Konfiguration die Regeln im Assoziativspeicher hierarchisch geordnet abzuspeichern. Hierbei obliegt es dem User, die Konfiguration entsprechend aufzubereiten, sodass bei Mehrfachhits jeweils die strengere Regel weiterverarbeitet wird. Welche Regel "gefeuert" hat, kann z.B. einem vom Assoziativspeicher erzeugbaren Vektor aus Flags oder Werten entnommen werden, der signalisiert, wo Hits oder Regelerfüllungen erfolgt sind. Die Ausgabedaten des von der Logik ausgewählten Hits können dann verwendet werden. Ein Assoziativspeicher kann somit pro Eingabe mehrfach feuern und dabei obliegt es der Implementierung, welcher Hit weiterverarbeitet wird (z.B. jeweils der erste Eintrag eines Anwendungszweckes).

Die Hauptidee besteht somit darin, einen Netzwerkprozessor 21 mit einem TCAM-Filter für eine Datenanalyse im Rahmen eines IDS zu verwenden. Der TCAM-Filter kann auch als Bestandteil des Netzwerkprozessors 21 realisiert sein.

Somit kann ohne Erzeugen einer zusätzlichen Latenz bei der Übertragung eines Datenpakets 18 zwischen den Ports 16, 17 eine Überprüfung des Datenpakets 18 auf zumindest ein Datenmuster 23 erfolgen, welches auf eine Manipulation des Datennetzwerks 11 hinweist. Auf ein solches Datenmuster 23 kann mit Aktionsdaten 24 reagiert werden, welche eine Detektionsaktion 33 auslösen oder steuern können. Es können Headerdaten eines Datenpakets 18 klassifiziert werden, um einen Pakettyp und/oder ein Protokoll des Datenpakets 18 zu identifizieren und entsprechend mittels eines Positionsdatensatzes 28 können Überwachungspositionen 29 zum Auswählen von Detektionsdaten 30 festgelegt werden. Diese Detektionsdaten 30 können zu einem Detektionsschlüssel oder Eingabedaten für den Assoziativspeicher zusammengefasst werden, der diese als Überwachungsdaten 26' verarbeiten kann. Somit kann auf die optimierte Datenverarbeitung eines TCAM-Filters zurückgegriffen werden.

Der Netzwerkprozessor kann dahingehend programmiert und/oder konfiguriert sein, dass er mit der Übertragungsgeschwindigkeit des Datennetzwerks, das heißt ohne Hinzufügung einer weiteren Latenz, unterschiedliche Pakettypen beispielsweise anhand der Headerdaten erkennt und unterscheidet und basierend auf dem Pakettyp oder Headertyp unterschiedliche Positionsdatensätze zum Festlegen der Überwachungspositionen, an welchen Daten aus dem Datenpaket extrahiert oder ausgelesen werden, auszuwählen. Dies kann auch konfigurierbar und/oder programmierbar sein, sodass beispielsweise der Mikroprozessor 35 im Betrieb der Switchvorrichtung 15 eine Anpassung oder Veränderung vornehmen kann, um die Überwachung dynamisch anzupassen. Ist ein Datenpaket als unverdächtig oder normal oder erwartet eingestuft, also ein zulässiges Datenpaket, kann das nächste Datenpaket verarbeitet werden.

Die ausgelesenen Detektionsdaten können vor dem Einspeisen oder Eingeben in den Assoziativspeicher kombiniert oder allgemein verarbeitet werden, sodass unterschiedliche Teile des Datenpakets kombiniert werden, wodurch die Datenanalyse unterstützt werden kann. Es kann beispielsweise eine Shift-Operation und/oder eine Kombination mehrerer unterschiedlicher Verarbeitungsregeln und/oder logischer Kombinationen vorgesehen sein. Danach können in dem Assoziativspeicher, insbesondere einem TCAM, diese Überwachungsdaten, also die neu kombinierten Daten, daraufhin überprüft werden, ob sich Aktionsdaten ergeben oder welche zugeordnet sein. Ergeben sich Aktionsdaten, so kann auf diese der Netzwerkprozessor reagieren, indem er beispielsweise das Datenpaket an der beschriebenen Datenschnittstelle an ein Software-Framework übergibt, das durch einen Mikroprozessor ausgeführt werden kann.

Insgesamt zeigen die Beispiele, wie ein Netzwerkprozessor und ein TCAM-Assoziativspeicher für eine Netzwerküberwachung kombiniert werden können.

## Patentansprüche

1. Verfahren zum Überwachen eines Datennetzwerks (11) in einem Kraftfahrzeug (10), wobei in dem Datennetzwerk (11) eine Switchvorrichtung (15) betrieben wird, in welcher physikalische Ports (16, 17) zum Empfangen und zum Aussenden von Datenpaketen (18) über eine Switchschaltung (20) verschaltet sind, und bei dem Verfahren aus einem jeweiligen Datenpaket (18), das über einen der Ports (16, 17) empfangen wird, Zielbestimmungsdaten (26) an vorbestimmten Auswahlpositionen (25) des Datenpakets (18) ausgelesen werden und den Zielbestimmungsdaten (26) durch einen Assoziativspeicher (22) Zielportdaten (27), die zumindest einen Zielport (19) für das Datenpaket (18) angeben, zugeordnet werden und gemäß den Zielportdaten (27) zumindest einer der Ports (16, 17) als jeweiliger Zielport (19) ausgewählt und durch die Switchschaltung (20) das empfangene Datenpaket (18) an den zumindest einen Zielport (19) zum Aussenden geleitet wird, wobei
in dem Assoziativspeicher (22) zusätzlich zumindest ein Datenmuster (23) eines zu überwachenden und/oder zu detektierenden Pakettyps und/oder Dateninhalts jeweils zusammen mit zugeordneten Aktionsdaten (32) gespeichert gehalten wird und
in einem Netzwerkprozessor (21) dynamisch auswählbare Überwachungspositionen (29) von zu überwachenden Detektionsdaten (30) des jeweiligen Datenpakets (18) festgelegt sind und
der Netzwerkprozessor (21) an den Überwachungspositionen (29) die Detektionsdaten (30) aus dem Datenpaket (18) ausliest und aus den Detektionsdaten (30) Überwachungsdaten (26') bildet, welche weniger Daten als ein Paketheader des jeweiligen Datenpakets umfassen, wobei das Bilden der Überwachungsdaten (26') umfasst, dass die Detektionsdaten (30) durch Anwenden zumindest einer datenverändernden Vorverarbeitung (31) auf die Detektionsdaten (30) diese in die Überwachungsdaten (26') umgewandelt werden, welche zu einer Zusammenfassung und/oder Kompression von Bits oder Bytes der Detektionsdaten (30) und/oder einer Identifikation unerwünschten Datenverkehrs führt,
und der Netzwerkprozessor (21) durch Eingeben der Überwachungsdaten (26) in den Assoziativspeicher (22) überprüft, welche Aktionsdaten (32) sich ergeben, und
gemäß den sich ergebenden Aktionsdaten (32) eine Detektionsaktion (33) für das Datenpaket (18) gesteuert wird und Ergebnisdaten (37) der Detektionsaktion über eine Datenschnittstelle (34) an einen Mikroprozessor (35), der mit der Switchvorrichtung (15) über die Datenschnittstelle (34) gekoppelt ist, signalisiert werden,
**dadurch gekennzeichnet, dass**
mehrere Datensätze für jeweilige, unterschiedliche Überwachungspositionen (29) bereitgestellt werden und durch den Netzwerkprozessor (21) anhand von Daten des Datenpakets (18) eine Paketcharakteristik des jeweiligen Datenpakets (18) ermittelt wird und in Abhängigkeit von der ermittelten Paketcharakteristik einer aus den Datensätzen ausgewählt wird und die Detektionsdaten (30) an den durch den ausgewählten Datensatz (28) angegebenen Überwachungspositionen ausgelesen werden,
wobei die datenverändernde Operation (31) umfasst, dass die Detektionsdaten (30) mittels einer Shift-Operation (31) umgeordnet und/oder mittels zumindest einer Kombinationsregel kombiniert werden.

2. Verfahren nach Anspruch 1, wobei die Paketcharakteristik ein Kommunikationsprotokoll und/oder einen Pakettypen und/oder Dateninhalte angibt.

3. Verfahren nach einem der vorhergehenden Ansprüche, wobei der Mikroprozessor (35) anhand von Sendeplandaten, welche ein bestimmungsgemäßes Sendeschema von Steuergeräten, die über das Datennetzwerk (11) kommunizieren, mittels einer vorbestimmten Abgleichroutine erkennt, dass die Ergebnisdaten (37) von dem Sendeschema abweichen, und in diesem Fall eine vorbestimmte Abwehrroutine (35) auslöst.

4. Verfahren nach einem der vorhergehenden Ansprüche, wobei die Überwachungspositionen (29) unzusammenhängende Datenfelder des Datenpakets (18) beschreiben.

5. Verfahren nach einem der vorhergehenden Ansprüche, wobei die Aktionsdaten (34) durch den Mikroprozessor (35) über die Datenschnittstelle (34) im Betrieb festgelegt und/oder geändert werden.

6. Verfahren nach einem der vorhergehenden Ansprüche, wobei zusätzlich zu den Ergebnisdaten (37) der Detektionsaktion (33) oder als Bestandteil der Ergebnisdaten (37) das jeweilige Datenpaket (18) oder ein Teil davon über die Datenschnittstelle (34) an den Mikroprozessor übermittelt wird.

7. Verfahren nach einem der vorhergehenden Ansprüche, wobei als Datenpakete (18) Ethernetpakete überwacht werden.

8. Switchvorrichtung (15) für ein Datennetzwerk (11) eines Kraftfahrzeugs (10), wobei die Switchvorrichtung (15) einen Netzwerkprozessor (21) und einen Assoziativspeicher (22) aufweist, die dazu eingerichtet sind, die den Netzwerkprozessor (21) und den Assoziativspeicher (22) betreffenden Schritte eines Verfahrens nach einem der vorhergehenden Ansprüche durchzuführen.

9. Kraftfahrzeug (10) mit einem Datennetzwerk (11), bei welchem mehrere Netzwerkzweige über eine Switchvorrichtung (15) nach Anspruch 8 verschaltet sind, und mit einem Mikroprozessor (35), der über eine Datenschnittstelle mit der Switchvorrichtung (15) gekoppelt ist, wobei das Kraftfahrzeug (10) dazu eingerichtet ist, ein Verfahren nach einem der Ansprüche 1 bis 7 durchzuführen.

## Claims

1. A method for monitoring a data network (11) in a motor vehicle (10), wherein a switch device (15) is operated in the data network (11), in which physical ports (16, 17) for receiving and for transmitting data packets (18) are interconnected via a switch circuit (20), and in the method, target determination data (26) is read out from a respective data packet (18), which is received via one of the ports (16, 17), in predetermined selection positions (25) of the data packet (18), and target port data (27), which indicates at least one target port (19) for the data packet (18), is associated with the target determination data (26) by an associative memory (22), and at least one of the ports (16, 17) is selected as a respective target port (19) according to the target port data (27), and the received data packet (18) is passed to the at least one target port (19) for transmitting by the switch circuit (20),
wherein
at least one data pattern (23) of a packet type and/or data content to be monitored and/or detected is additionally kept stored together with respectively associated action data (32) in the associative memory (22), and
dynamically selectable
monitoring positions (29) of detection data (30) of the respective data packet (18) to be monitored are also determined in a network processor (21), and
the network processor (21) reads out the detection data (30) from the data packet (18) in the monitoring positions (29) and forms monitoring data (26') from the detection data (30), which comprise less data than a packet header of the respective data packet, wherein the forming of the monitoring data (26') comprises that the detection data (30) by applying at least one data-changing preprocessing (31) to the detection data (30) the same are converted into the monitoring data (26'), which leads to a combination and/or compression of bits or bytes of the detection data (30) and/or an identification of unwanted data traffic, and the network processor (21) examines which action data (32) results, by inputting the monitoring data (26) into the associative memory (22), and
a detection action (33) for the data packet (18) is controlled according to the resulting action data (32), and result data (37) of the detection action is signalized via a data interface (34) to a microprocessor (35), which is coupled to the switch device (15) via the data interface (34),
**characterized in that**
multiple datasets are provided for respective, different monitoring positions (29), and a packet characteristic of the respective data packet (18) is ascertained by the network processor (21) based on data of the data packet (18), and one of the datasets is selected depending on the ascertained packet characteristic and the detection data (30) is read out in the monitoring positions indicated by the selected dataset (28),
wherein the data-changing operation (31) comprises that the detection data (30) is rearranged by a shift operation (31) and/or is combined by at least one combination rule.

2. The method according to claim 1, wherein the packet characteristic indicates a communication protocol and/or packet type and/or data contents.

3. The method according to any one of the preceding claims, wherein the microprocessor (35) recognizes based on transmission schedule data, which describes an intended transmission scheme of control devices, which communicate via the data network (11), by a predetermined comparison routine that the result data (37) deviates from the transmission scheme, and initiates a predetermined defense routine (35) in this case.

4. The method according to any one of the preceding claims, wherein the monitoring positions (29) describe disjunct data fields of the data packet (18).

5. The method according to any one of the preceding claims, wherein the action data (34) is determined and/or changed in the operation by the microprocessor (35) via the data interface (34).

6. The method according to any one of the preceding claims, wherein the respective data packet (18) or a part thereof is communicated to the microprocessor via the data interface (34) in addition to the result data (37) of the detection action (33) or as a constituent of the result data (37).

7. The method according to any one of the preceding claims, wherein Ethernet packets are monitored as the data packets (18).

8. A switch device (15) for a data network (11) of a motor vehicle (10), wherein the switch device (15) comprises a network processor (21) and an associative memory (22), which are configured to perform the steps of a method according to any one of the preceding claims relating to the network processor (21) and the associative memory (22).

9. A motor vehicle (10) with a data network (11), in which multiple network branches are interconnected via a switch device (15) according to claim 8, and with a microprocessor (35), which is coupled to the switch device (15) via a data interface, wherein the motor vehicle (10) is configured to perform a method according to any one of claims 1 to 7.

## Revendications

1. Procédé de surveillance d'un réseau de données (11) dans un véhicule à moteur (10), un dispositif de commutation (15) fonctionnant dans le réseau de données (11) dans lequel des ports physiques (16, 17) sont interconnectés pour recevoir et envoyer des paquets de données (18) via un circuit de commutation (20), et procédé dans lequel, à partir d'un paquet de données (18) respectif reçu via l'un des ports (16, 17), des données de détermination de destination (26) sont lues à des positions de sélection (25) prédéfinies du paquet de données (18) et les données de détermination de destination (26) sont affectées, par une mémoire associative (22), à des données de port cible (27) qui indiquent au moins un port cible (19) pour le paquet de données (18) et, selon les données de port de destination (27), au moins un des ports (16, 17) est sélectionné en tant que port de destination (19) respectif et le paquet de données (18) reçu est transféré par le circuit de commutation (20) vers le au moins un port de destination (19) en vue d'un envoi,
en outre, au moins un modèle de données (23) d'un type de paquet et/ou de contenu de données à surveiller et/ou à détecter est respectivement stocké dans la mémoire associative (22) en association avec des données d'action (32) affectées, et
des positions de surveillance (29) de données de détection (30) à surveiller du paquet de données (18) respectif, sélectionnables de façon dynamique, sont définies dans un processeur de réseau (21), et
le processeur de réseau (21) lit, aux positions de surveillance (29), les données de détection (30) dans le paquet de données (18) et forme, à partir des données de détection (30), des données de surveillance (26') qui comprennent moins de données qu'un en-tête de paquet du paquet de données respectif, la formation des données de surveillance (26') comprenant de convertir les données de détection (30) en données de surveillance (26') en appliquant aux données de détection (30) au moins un pré-traitement de modification de données (31) qui entraîne un regroupement et/ou une compression de bits ou d'octets des données de détection (30) et/ou une identification de trafic de données non voulu ;
et le processeur de réseau (21) contrôle les données d'action (32) résultantes en entrant les données de surveillance (26) dans la mémoire associative (22), et
selon les données d'action (32) résultantes, une action de détection (33) est commandée pour le paquet de données (18) et des données de résultat (37) de l'action de détection sont signalées, via une interface de données (34), à un microprocesseur (35) qui est couplé au dispositif de commutation (15) via l'interface de données (34),
**caractérisé en ce que**
plusieurs ensembles de données pour différentes positions de surveillance (29) respectives sont fournis et une caractéristique de paquet du paquet de données (18) respectif est déterminée par le processeur de réseau (21) au moyen de données du paquet de données (18), et en fonction de la caractéristique de paquet déterminée, l'un des ensembles de données est sélectionné et les données de détection (30) sont lues aux positions de surveillance indiquées par l'ensemble de données (28) sélectionné,
l'opération de modification des données (31) comprenant de réorganiser les données de détection (30) au moyen d'une opération de décalage (31) et/ou de les combiner au moyen d'au moins une règle de combinaison.

2. Procédé selon la revendication 1, dans lequel la caractéristique de paquet indique un protocole de communication et/ou un type de paquet et/ou un contenu de données.

3. Procédé selon l'une des revendications précédentes, dans lequel le microprocesseur (35) identifie, au moyen d'un programme de comparaison prédéterminé, sur la base de données d'un plan de transmission identifiant un schéma de transmission d'appareils de commande communiquant via le réseau de données (11), que les données de résultat (37) s'écartent du schéma de transmission et déclenche, dans ce cas, un programme de défense (35) prédéterminé.

4. Procédé selon l'une des revendications précédentes, dans lequel les positions de surveillance (29) décrivent des champs de données discontinus du paquet de données (18).

5. Procédé selon l'une des revendications précédentes, dans lequel les données d'action (34) sont définies et/ou changées par le microprocesseur (35) via l'interface de données (34), pendant le fonctionnement.

6. Procédé selon l'une des revendications précédentes, dans lequel, en plus des données de résultat (37) de l'action de détection (33) ou en tant que partie des données de résultat (37), le paquet de données (18) respectif ou une partie de celui-ci est transmis au microprocesseur via l'interface de données (34).

7. Procédé selon l'une des revendications précédentes, dans lequel des paquets Ethernet sont surveillés comme des paquets de données (18).

8. Dispositif de commutation (15) pour un réseau de données (11) d'un véhicule à moteur (10), dans lequel le dispositif de commutation (15) comporte un processeur de réseau (21) et une mémoire associative (22) qui sont configurés pour réaliser les étapes d'un procédé concernant le processeur de réseau (21) et la mémoire associative (22) selon l'une des revendications précédentes.

9. Véhicule à moteur (10) ayant un réseau de données (11) dans lequel plusieurs branches de réseau sont interconnectées par un dispositif de commutation (15) selon la revendication 8, et ayant un microprocesseur (35) couplé au dispositif de commutation (15) via une interface de données, le véhicule à moteur (10) étant configuré pour mettre en œuvre un procédé selon l'une des revendications 1 à 7.
